# EUROPÄISCHE PATENTSCHRIFT

(11) **EP 1 529 782 B1**
(45) Veröffentlichungstag und Bekanntmachung des Hinweises auf die Patenterteilung: **10.05.2006**
(21) Anmeldenummer: 04025248.8
(22) Anmeldetag: 23.10.2004
(51) Int. Cl.: C07F 7/18

(54) **Verfahren zur Herstellung von (Mercaptoorganyl)-alkoxysilanen**
Process for preparing mercaptoorganyl alkoxy silanes
Procédé de préparation de mercaptoorganyl alkoxysilanes

(30) Priorität: 06.11.2003 DE 10351736
(43) Veröffentlichungstag der Anmeldung: 11.05.2005
(73) Patentinhaber: Degussa AG, 40474 Düsseldorf (DE)
(72) Erfinder: Korth, Karsten, Dr., 79639 Grenzach-Wyhlen (DE); Albert, Philipp, Dr., 79539 Lörrach (DE); Kiefer, Ingo, 79650 Schopfheim (DE)

(56) Entgegenhaltungen:
- EP-A- 0 471 164
- GB-A- 1 102 251
- US-A- 5 840 952

## Beschreibung

Die Erfindung betrifft ein Verfahren zur Herstellung von (Mercaptoorganyl)alkoxysilanen.

Es ist bekannt Mercaptoalkylsilane in einer Einschrittreaktion durch Umsetzung geeigneter (Halogenorganyl)-alkoxysilan-Verbindungen mit Thioharnstoff und Ammoniak herzustellen (DE AS 2035619). Diese Methode hat den Nachteil, daß zur Erzielung wirtschaftlich akzeptabler Umsatzraten lange Batchzeiten (mehr als 24 h) benötigt werden. Die bei Anwendung dieser Verfahrensweise erzielbaren Ausbeuten sind schwankend und erreichen nur Werte zwischen 75 und 80%, bezogen auf den Umsatz an eingesetzter (Halogenorganyl)alkoxysilan-Verbindung. Außerdem fällt bei dieser Verfahrensweise Guanidin-Hydrochlorid an, dessen Abtrennung und Entsorgung zusätzlichen Aufwand erforderlich macht.

Ferner sind Verfahren zur Herstellung von Mercaptoalkylsilanen bekannt, wobei durch Druck-Hydrierung von Thiopropionsäureamid-Silanen (EP 0018094) oder durch Hydrierung von Cyanoalkylsilan-Verbindungen in Gegenwart von elementarem Schwefel oder Schwefelwasserstoff die Umsetzung zu Mercaptosilanen erfolgt (US-PS 4012403). Beide Verfahren haben den Nachteil einer schlechten Ausbeute.

Aus US 3,849,471 ist die Herstellung von Mercaptosilanen durch Umsetzung von den entsprechenden (Halogenorganyl)alkoxysilan-Verbindungen mit Schwefelwasserstoff in Gegenwart von Ethylendiamin und großen Mengen an Schwermetallsulfiden bekannt. Nachteil dieses Verfahrens ist die Bildung von diversen Nebenprodukten und deren Abtrennung.

Ferner ist bekannt, daß das Verfahren aus US 3,849,471 durch Umsetzung der Ausgangssilane mit Schwefelwasserstoff nicht in Gegenwart von Diaminen, sondern in Gegenwart von Ammoniak, primären, sekundären oder tertiären Aminen, gegebenfalls zusätzlich in Gegenwart von polaren, protischen oder aprotischen Medien verbessert werden kann (US 4,082,790). Nachteilig bei dieser Verfahrensweise ist, daß zur Erreichung der für die Umsetzung der Reaktanden erforderlichen Reaktionstemperaturen die Reaktionen in Druckautoklaven durchgeführt werden müssen. Werden die Umsetzungen in Abwesenheit von polaren Medien vorgenommen, müssen zur Erzielung akzeptabler Umsatzraten unwirtschaftlich lange Reaktionszeiten in Kauf genommen werden. Zudem ist die Dosierung und Handhabung des hochgiftigen H₂S im industriellen Maßstab unerwünscht, aufwändig und mit hohen Sicherheitsvorkehrungen verbunden.

Aus GB 1 102 251 ist die Umsetzung von Alkalihydrogensulfiden mit (Halogenalkyl)alkoxysilanen in methanolischem Medium zu den entsprechenden Mercaptosilanen bekannt. Nachteilig bei dieser Verfahrensweise ist die zur Erzielung hoher Umsatzraten außergewöhnlich lange Reaktionszeit (96 h) und die dabei erzielte unbefriedigende Ausbeute.

Es ist bekannt (Mercaptoalkyl)alkoxysilane durch die Umsetzung von Alkalihydrogensulfid mit geeigneten (Halogenalkyl)alkoxysilanen unter Anwesenheit von 10-100 % molarem Überschuss an H₂S herzustellen (US 5,840,952). Dieses Verfahren hat im industriellen Maßstab den Nachteil, daß hochgiftiges H₂S dosiert und gehandhabt werden muß. Das bekannte Verfahren muß in 2 Stufen durchgeführt werden, wodurch die Raum-Zeit- - Ausbeute des Verfahrens sinkt. Ferner ist bekannt (Mercaptoalkyl)alkoxysilane durch die Umsetzung von (Halogenalkyl)alkoxysilanen mit Alkalihydrogensulfid (NaSH) in polaren, aprotischen Lösungsmitteln herzustellen (EP 0 471 164). Der Nachteil des Verfahrens besteht darin, daß große Mengen, mindestens 50 Vol%, Lösungsmittel verwendet werden und beispielsweise im Falle von Dimethylformamid dieses giftig ist. Zudem erschwert der hohe Siedepunkt von Dimethylformamid die spätere destillative Aufarbeitung und Reinigung der Reaktionsprodukte.

Aufgabe der Erfindung ist es, ein Verfahren zur Herstellung von (Mercaptoorganyl)alkoxysilanen zur Verfügung zu stellen, bei dem keine gasförmigen Rohstoffe eingesetzt werden und man speziell unter Vermeidung der Dosierung und Handhabung von hochgiftigem Schwefelwasserstoff oder giftigem Dimethylformamid zu hohen Raum-Zeitausbeuten bei der Umsetzung der (Halogenorganyl)silane gelangt.

Gegenstand der Erfindung ist ein Verfahren zur Herstellung von (Mercaptoorganyl)alkoxysilanen, welches dadurch gekennzeichnet ist, daß man Alkalimetallsulfid mit einem Gemisch aus (Halogenorganyl)alkoxysilan und (Halogenorganyl)halogensilan in einem Alkohol unter Luftabschluß und einem erhöhten Druck umsetzt.

(Mercaptoorganyl)alkoxysilane können Verbindungen der allgemeinen Formel I 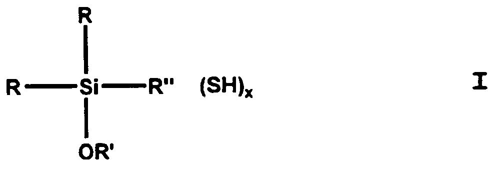 sein, wobei R gleich oder verschieden und eine Alkyl-,vorzugsweise CH₃, Alkenyl-, Aryl- oder Aralkylgruppe mit C₁-C₈ oder eine OR' Gruppe ist,
R' gleich oder verschieden und eine C₁-C₂₄, vorzugsweise C₁-C₄ oder C₁₂-C₁₈, verzweigte oder unverzweigte einbindige Alkyl- oder Alkenyl-Gruppe, Arylgruppe, Aralkylgruppe ist,
R'' eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls mit F-, Cl-, Br-, I-, NH₂- oder NHR' substituiert ist, ist,
x gleich 1-3 ist.

Für x = 1 kann R'' -CH₂-, -CH₂CH₂-, -CH₂CH₂CH₂-, -CH₂CH₂CH₂CH₂-, -CH(CH₃)-, -CH₂CH(CH₃)-, -CH(CH₃)CH₂-, -C(CH₃)₂-, -CH(C₂H₅)-, -CH₂CH₂CH(CH₃)-, -CH₂CH(CH₃)CH₂- oder 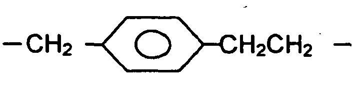 bedeuten. Für x = 2 kann R'' CH, -CH-CH₂, -CH₂-CH, -C-CH₃, -CH-CH₂-CH₂, -CH-CH-CH₃ oder -CH₂-CH-CH₂ bedeuten.

(Mercaptoorganyl)alkoxysilane der allgemeinen Formel I können sein:
3-Mercaptopropyl(trimethoxysilan),
3-Mercaptopropyl(triethoxysilan),
3-Mercaptopropyl(diethoxymethoxysilan),
3-Mercaptopropyl(tripropoxysilan),
3-Mercaptopropyl(dipropoxymethoxysilan),
3-Mercaptopropyl(tridodecanoxysilan),
3-Mercaptopropyl(tritetradecanoxysilan), -
3-Mercaptopropyl(trihexadecanoxysilan),
3-Mercaptopropyl(trioctadecanoxysilan),
3-Mercaptopropyl(didodecanoxy)tetradecanoxysilan,
3-Mercaptopropyl(dodecanoxy)tetradecanoxy(hexadecanoxy) silan,

3-Mercaptopropyl(dimethoxymethylsilan),
3-Mercaptopropyl(methoxydimethylsilan),
3-Mercaptopropyl(diethoxymethylsilan),
3-Mercaptopropyl(ethoxydimethylsilan),

3-Mercaptopropyl(dipropoxymethylsilan),
3-Mercaptopropyl(propoxydimethylsilan),
3-Mercaptopropyl(diisopropoxymethylsilan),
3-Mercaptopropyl(isopropoxydimethylsilan),
3-Mercaptopropyl(dibutoxymethylsilan),
3-Mercaptopropyl(butoxydimethylsilan),
3-Mercaptopropyl(diisobutoxymethylsilan),
3-Mercaptopropyl(isobutoxydimethylsilan),
3-Mercaptopropyl(didodecanoxymethylsilan),
3-Mercaptopropyl(dodecanoxydimethylsilan),
3-Mercaptopropyl(ditetradecanoxymethylsilan),
3-Mercaptopropyl(tetradecanoxydimethylsilan),

2-Mercaptoethyl(trimethoxysilan),
2-Mercaptoethyl(triethoxysilan),
2-Mercaptoethyl(diethoxymethoxysilan),
2-Mercaptoethyl(tripropoxysilan),
2-Mercaptoethyl(dipropoxymethoxysilan),
2-Mercaptoethyl(tridodecanoxysilan),
2-Mercaptoethyl(tritetradecanoxysilan),
2-Mercaptoethyl(trihexadecanoxysilan),
2-Mercaptoethyl(trioctadecanoxysilan),
2-Mercaptoethyl(didodecanoxy)tetradecanoxysilan,
2-Mercaptoethyl(dodecanoxy)tetradecanoxy(hexadecanoxy) silan,

2-Mercaptoethyl(dimethoxymethylsilan),
2-Mercaptoethyl(methoxydimethylsilan),
2-Mercaptoethyl(diethoxymethylsilan),
2-Mercaptoethyl(ethoxydimethylsilan),
1-Mercaptomethyl(trimethoxysilan),
1-Mercaptomethyl (triethoxysilan),
1-Mercaptomethyl (diethoxymethoxysilan),
1-Mercaptomethyl(dipropoxymethoxysilan),
1-Mercaptomethyl (tripropoxysilan),
1-Mercaptomethyl(trimethoxysilan),
1-Mercaptomethyl (dimethoxymethylsilan),
1-Mercaptomethyl (methoxydimethylsilan),
1-Mercaptomethyl(diethoxymethylsilan),
1-Mercaptomethyl(ethoxydimethylsilan),

1,3-Dimercaptopropyl(trimethoxysilan),
1,3-Dimercaptopropyl(triethoxysilan),
1,3-Dimercaptopropyl(tripropoxysilan),
1,3-Dimercaptopropyl(tridodecanoxysilan),
1,3-Dimercaptopropyl(tritetradecanoxysilan),
1,3-Dimercaptopropyl(trihexadecanoxysilan),

2,3-Dimercaptopropyl(trimethoxysilan),
2,3-Dimercaptopropyl (triethoxysilan),
2,3-Dimercaptopropyl(tripropoxysilan),
2,3-Dimercaptopropyl(tridodecanoxysilan),
2,3-Dimercaptopropyl(tritetradecanoxysilan),
2,3-Dimercaptopropyl(trihexadecanoxysilan),

3-Mercaptobutyl (trimethoxysilan),
3-Mercaptobutyl (triethoxysilan),
3-Mercaptobutyl(diethoxymethoxysilan),
3-Mercaptobutyl (tripropoxysilan),
3-Mercaptobutyl(dipropoxymethoxysilan),
3-Mercaptobutyl(dimethoxymethylsilan),
3-Mercaptobutyl(diethoxymethylsilan),
3-Mercaptobutyl(dimethylmethoxysilan),
3-Mercaptobutyl(dimethylethoxysilan),
3-Mercaptobutyl(tridodecanoxysilan),
3-Mercaptobutyl(tritetradecanoxysilan),
3-Mercaptobutyl(trihexadecanoxysilan),
3-Mercaptobutyl(didodecanoxy)tetradecanoxysilan oder
3-Mercaptobutyl(dodecanoxy)tetradecanoxy(hexadecanoxy) silan.

Es können bei dem Verfahren zur Herstellung von (Mercaptoorganyl)alkoxysilanen Verbindungen der allgemeinen Formel I oder auch Mischungen aus Verbindungen der allgemeine Formel I entstehen.

Als (Halogenorganyl)alkyoxysilane können Verbindungen der allgemeinen Formel II 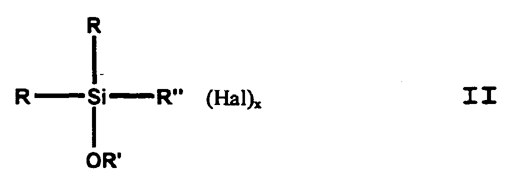 eingesetzt werden, wobei x, R, R' und R'' die oben angegebene Bedeutung haben und Hal Chlor, Brom, Fluor oder Iod ist.

Vorzugsweise können als (Halogenorganyl)alkyoxysilane
3-Chlorbutyl(triethoxysilan),
3-Chlorbutyl(trimethoxysilan),
3-Chlorbutyl(diethoxymethoxysilan),
3-Chlorpropyl(triethoxysilan),
3-Chlorpropyl(trimethoxysilan),
3-Chlorpropyl(diethoxymethoxysilan),
2-Chlorethyl(triethoxysilan),
2-Chlorethyl(trimethoxysilan),
2-Chlorethyl(diethoxymethoxysilan),
1-Chlormethyl(triethoxysilan),
1-Chlormethyl(trimethoxysilan),
1-Chlormethyldiethoxymethoxysilan),
3-Chlorpropyl(diethoxymethylsilan),
3-Chlorpropyl(dimethoxymethylsilan),
2-Chlorethyl(diethoxymethylsilan),
2-Chlorethyl(dimethoxymethylsilan),
1-Chlormethyl(diethoxymethylsilan),
1-Chlormethyl(dimethoxymethylsilan),
3-Chlorpropyl(ethoxydimethylsilan),
3-Chlorpropyl(methoxydimethylsilan),
2-Chlorethyl(ethoxydimethylsilan),
2-Chlorethyl(methoxydimethylsilan),
1-Chlormethyl(ethoxydimethylsilan) oder
1-Chlormethyl(methoxydimethylsilan) eingesetzt werden.

Das (Halogenorganyl)alkoxysilan kann ein (Halogenorganyl)alkoxysilan der allgemeinen Formel II oder eine Mischung aus (Halogenorganyl)alkoxysilanen der allgemeinen Formel II sein.

Als (Halogenorganyl)halogensilane können Verbindungen der allgemeinen Formel III 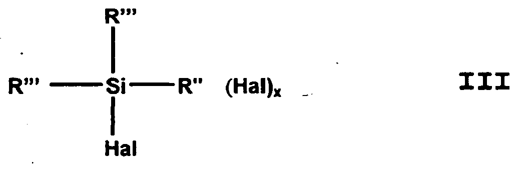 eingesetzt werden, wobei x, Hal, R und R'' die oben angegebene Bedeutung haben und R''' unabhängig voneinander R oder Hal ist.

Vorzugsweise können als (Halogenorganyl)halogensilane
3-Chlorbutyl(trichlorsilan),
3-Chlorpropyl(trichlorsilan),
2-Chlorethyl(trichlorsilan),
1-Chlormethyl(trichlorsilan),
3-Chlorbutyl(dichlormethoxysilan),
3-Chlorpropyl(dichlormethoxysilan),
2-Chlorethyl(dichlormethoxysilan),
1-Chlormethyl(dichlormethoxysilan),
3-Chlorbutyl(dichlorethoxysilan),
3-Chlorpropyl(dichlorethoxysilan),
2-Chlorethyl(dichlorethoxysilan),
1-Chlormethyl(dichlorethoxysilan),
3-Chlorbutyl(chlordiethoxysilan),
3-Chlorpropyl(chlordiethoxysilan),
2-Chlorethyl(chlordiethoxysilan),
1-Chlormethyl(chlordiethoxysilan),
3-Chlorbutyl(chlordimethoxysilan),
3-Chlorpropyl(chlordimethoxysilan),
2-Chlorethyl(chlordimethoxysilan),
1-Chlormethyl(chlordimethoxysilan),
3-Chlorbutyl(dichlormethylsilan),
3-Chlorpropyl(dichlormethylsilan),
2-Chlorethyl(dichlormethylsilan),
1-Chlormethyl(dichlormethylsilan),
3-Chlorbutyl(chlor-)(methyl-)methoxysilan),
3-Chlorpropyl(chlor-)(methyl-)methoxysilan),
2-Chlorethyl(chlor-)(methyl-)methoxysilan),
1-Chlormethyl(chlor-)(methyl-)methoxysilan),
3-Chlorbutyl(chlor-)(methyl-)ethoxysilan),
3-Chlorpropyl(chlor-)(methyl-)ethoxysilan),
2-Chlorethyl(chlor-)(methyl-)ethoxysilan),
1-Chlormethyl-(chlor-)(methyl-)ethoxysilan),
3-Chlorbutyl(chlordimethylsilan),
3-Chlorpropyl(chlordimethylsilan),
2-Chlorethyl(chlordimethylsilan) oder
1-Chlormethyl(chlordimethylsilan) eingesetzt werden.

Das (Halogenorganyl)halogensilan kann ein (Halogenorganyl)halogensilan der allgemeinen Formel III oder eine Mischung aus (Halogenorganyl)halogensilanen der allgemeinen Formel III sein.

(Mercaptoorganyl)alkoxysilane der allgemeinen Formel I 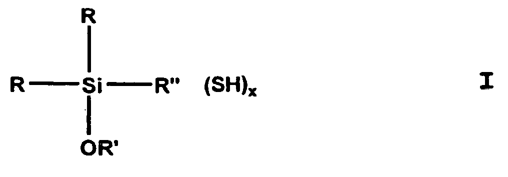 können durch Umsetzung von Alkalimetallsulfid mit einem Gemisch aus (Halogenorganyl)alkoxysilan der allgemeinen Formel II 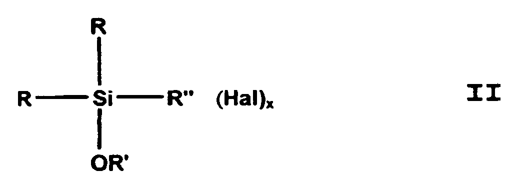 und (Halogenorganyl)halogensilan der allgemeinen Fomel III 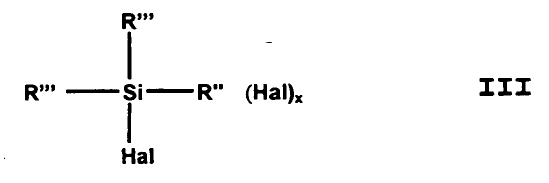 in einem Alkohol unter Luftabschluß und einem erhöhten Druck hergestellt werden.

Es kann durch die Wahl der (Halogenorganyl)alkyoxysilane und (Halogenorganyl)halogensilane aktiv und gezielt Einfluß auf die Zusammensetzung von Mischungen aus Verbindungen der allgemeinen Formel I genommen werden.

Die Qualität und Art der Zusammensetzung der Mischung aus (Halogenorganyl)alkyoxysilan und (Halogenorganyl)-halogensilan kann auf Grundlage der Menge und Art der in der Mischung enthaltenen, hydrolisierbaren Si-Hal Bindungen beurteilt werden.

Die Menge an hydrolisierbaren Si-Hal Bindungen wird durch das folgende Verfahren bestimmt:

Maximal 20 g der Probe werden in einem 150 ml Becherglas mit 80 ml Ethanol und 10 ml Essigsäure versetzt. Der Halogenidgehalt wird potentiographisch mit Silbernitratlösung (c(AgNO3)=0,01 mol/l) titriert.

Die vorteilhaften molaren Verhältnisse der Mischungen aus (Halogenorganyl)alkyoxysilanen und (Halogen-organyl)halogensilanen können unter anderem von der Anzahl der Si-Halogen-Funktionen der gewählten (Halogenorganyl)halogensilane abhängig sein.

(Halogenorganyl)alkyoxysilan und (Halogenorganyl)-halogensilan können im molaren Verhältnis 0,001:1 bis 2:1 eingesetzt werden.

Beispielsweise kann bei der Umsetzung von 3-Chlorpropyl(trimethoxysilan) oder 3-Chlorpropyl-(triethoxysilan) und 3-Chlorpropyl(trichlorsilan) bevorzugt ein molares Verhältnis von 2:1 bis 2:1,5, besonders bevorzugt ein molares Verhältnis von 2:1 bis 2:1,25, verwendet werden.

Beispielsweise kann bei der Umsetzung von 3-Chlorpropyl(methyldimethoxysilan) oder 3-Chlorpropyl(methyldiethoxysilan) und 3-Chlorpropyl-(methyldichlorsilan) bevorzugt ein molares Verhälnis von 1:1 bis 1:1,25, besonders bevorzugt ein molares Verhälnis von 1:1 bis 1:1,15, verwendet werden.

Beispielsweise kann bei der Umsetzung von 3-Chlorpropyl(dimethylmethoxysilan) oder von 3-Chlorpropyl(dimethylethoxysilan) und 3-Chlorpropyl-(dimethylchlorsilan) bevorzugt ein molares Verhälnis von 0,001:1 bis 0,05:1 verwendet werden.

Die für das Verfahren verwendete Mischung aus entsprechendem (Halogenorganyl)alkyoxysilan und (Halogenorganyl)halogensilan kann in Abhängigkeit von der verwendeten Apparatur und den gewünschten Effekten, beispielsweise Selektivität der Reaktion, Dauer der Umsetzung, Reaktorbelegung, Reaktormaterial oder Prozeßabfolge, bereits vor der Zugabe des Alkalisulfides hergestellt werden.

Alkalimetallsulfide können Dialkalimetallsulfide Me₂S sein. Als Dialkalimetallsulfide können Dilithiumsulfid (Li₂S), Dinatriumsulfid (Na₂S), Dikaliumsulfid (K₂S) und Dicäsiumsulfid (Cs₂S) eingesetzt werden.

Die verwendete, molare Menge an Alkalimetallsulfid kann die molare Menge des eingesetzten (Halogenorganyl)-halogensilans um 1% bis 200%, bevorzugt um 1% bis 150%, besonders bevorzugt um 1% bis 110%, übersteigen.

Das molare Verhältnis von hydrolisierbaren Silizium-Halogen Funktionen, in den Mischungen aus (Halogenorganyl)alkoxysilan und (Halogenorganyl)halogensilan, zu Alkalimetallsulfid (Me₂S) kann zwischen 1:0,51 und 1:1,2 vorzugsweise zwischen 1:0,6 und 1:1,15, besonders bevorzugt zwischen 1:0,75 und 1:1,05, betragen.

Das (Halogenorganyl)alkoxysilan und (Halogenorganyl)-halogensilan können miteinander in beliebiger Reihenfolge, Weise, Temperatur und Zeitdauer vermischt werden und erst dann der Alkohol und das Alkalisulfid gemeinsam oder nacheinander zugegeben werden.

Das (Halogenorganyl)halogensilan, Alkalisulfid und Alkohol können miteinander in beliebiger Reihenfolge, Weise, Temperatur und Zeitdauer vermischt werden und erst dann das (Halogenorganyl)alkoxysilan zugegeben werden.

Das (Halogenorganyl)alkoxysilan, Alkalisulfid und Alkohol können miteinander in beliebiger Reihenfolge, Weise, Temperatur und Zeitdauer vermischt werden und erst dann das (Halogenorganyl)halogensilan zugegeben werden.

Als Alkohol können primäre, sekundäre oder tertiäre Alkohole mit 1 bis 24, vorzugsweise 1 bis 6, besonders bevorzugt 1 bis 4, Kohlenstoffatomen eingesetzt werden.

Als primäre, sekundäre oder tertiäre Alkohole können Methanol, Ethanol, n-Propanol, i-Propanol, i-Butanol oder n-Butanol eingesetzt werden.

Die Menge an Alkohol kann mindestens 100 Vol.-%, bevorzugt 250 bis 1000 Vol.-%, besonders bevorzugt 500 bis 1000 Vol.-%, der eingesetzten Silankomponenten betragen.

Zu Beginn der Umsetzung und/oder während der Umsetzung und/oder zum Ende der Umsetzung können polare, protische, aprotische, basische oder saure Additive zur Reaktionsmischung zugegeben werden.

Unter erhöhtem Druck kann ein Überdruck von 0,1 bis 10 bar, bevorzugt 1 bis 7 bar, über Normaldruck verstanden werden.

Die Umsetzung kann bei Temperaturen zwischen 0 und 180°C, bevorzugt zwischen 50 und 150°C, besonders bevorzugt zwischen 70 und 120°C, ablaufen.

Die jeweils bezüglich der Ausbeute an Zielprodukt und Ausnutzung des Reaktionsvolumens optimale Reaktionstemperatur kann in Abhängigkeit von der Struktur des eingesetzten (Halogenorganyl)alkyoxysilans, (Halogenorganyl)halogensilans und Alkohols variieren.

Beispielsweise kann bei Reaktionen in Methanol eine Reaktionstemperatur zwischen 60 und 95°C im Bezug auf Reaktionszeiten, Nebenproduktmenge und Druckaufbau vorteilhaft sein.

Beispielsweise kann bei Reaktionen in Ethanol eine Reaktionstemperatur zwischen 75 und 120°C im Bezug auf Reaktionszeiten, Nebenproduktmenge und Druckaufbau vorteilhaft sein.

Die Umsetzung kann in einem geschlossenen Behälter unter Schutzgas erfolgen.

Die Umsetzung kann in korrosionsbeständigen Autoklaven, beispielsweise aus Glas, Teflon, emailliertem bzw. beschichteten Stahl, Hastelloy oder Tantal, erfolgen.

Die Nebenproduktmenge kann durch Wahl der Reaktions-bedingungen kleiner als 20 Mol% betragen.

Das erfindungsgemäße Verfahren hat die Vorteile, daß auf die Verwendung von hochtoxischen, gasförmigen Stoffen, wie Schwefelwasserstoff, als Schwefelspender verzichtet werden kann. Stattdessen werden Alkalimetallsulfide, die leicht dosierbare Feststoffe sind (zum Beispiel getrocknetes Dinatriumsulfid), als Schwefelspender verwendet.

Ein weiterer Vorteil des erfindungsgemäßen Verfahrens besteht darin, daß allein durch die Verwendung eines geschlossenen Reaktionsgefäßes (Autoklav oder ähnlichem) die Selektivität der Reaktion erhöht werden kann.

Ein weiterer Vorteil des erfindungsgemäßen Verfahrens gegenüber bekannten Verfahren sind die hohen Umsätze bei kurzen Batchzeiten und bei technisch einfach realisierbaren Temperaturen.

### Beispiele:

### GC-Analytik

Die GC-Analytik wird auf einem Gaschromatographen HP 6890 (WLD) mit einer DB5 Säule mit 0,53 mm Dicke und 1,5 µm Filmdicke durchgeführt. Als Detektor wird ein Wärmeleitfähigkeitsdetektor eingesetzt. Das verwendete Temperaturprogramm beinhaltete folgende Abläufe:
- Starttemperatur 100°C
- Initialzeit 1 Min.
- 20°C/Min auf 280°C
- 280°C 10 Min. halten

Die Retentionszeiten für die folgenden Komponenten betragen:

| | |
|---|---|
| bei 3,3 min | = Cl-(CH₂)₃-Si(OEth)₃ |
| bei 5,7 min Si263 | = HS-(CH₂)₃-Si(OEt)₃ |
| bei 11,0 min | = (EtO)₃Si-(CH₂)₃-S-(CH₂)₃-Si(OEt)₃ |
| bei 12,4 min | = (EtO)₃Si-(CH₂)₃-S₂-(CH₂)₃-Si(OEt)₃ |

### Beispiel 1:

29,6 g 3-Chlorpropyl(triethoxysilan) und 200 ml Ethanol werden in einem Autoklaven aus Edelstahl mit Glaseinsatz und magnetischer Rührvorrichtung bei -10°C gemeinsam vorgelegt. Es werden 17,6 g getrocknetes Na₂S in mehreren Portionen zur Lösung zugegeben. Es werden 16,4 g Chlorpropyl(trichlorsilan) zugegeben und der Autoklav schnell verschlossen. Der Autoklav und die darin befindlichen Stoffe werden für 180 min auf 120°C erhitzt. Dabei steigt der Druck bis auf 3,2 bar über Normaldruck. Der Autoklav wird auf Normaltemperatur abgekühlt und die gebildete Suspension entnommen. Das enthaltene Lösungsmittel wird in einem Rotationsverdampfer reduziert und der ausgefallene Feststoff mit einer inertisierten Fritte entfernt. Es werden 38,4 g einer klaren, leicht bräunlichen Lösung erhalten. Die GC-Analyse der Reaktionsmischung ergibt folgende Zusammensetzung in Flächenprozent:

| | |
|---|---|
| 3-Chlorpropyl(triethoxysilan) | 1,6 |
| 3-Mercaptopropyl(triethoxysilan) | 77,0 |
| (EtO)₃Si-(CH₂)₃-S-(CH₂)₃-Si(OEt)₃ | 7,3 |
| (EtO)₃Si-(CH₂)₃-S₂-(CH₂)₃-Si(OEt) ₃ | 3, 5 |

### Beispiel 2:

24 g 3-Chlorpropyl(triethoxysilan) und 150 ml Ethanol werden in einem Autoklaven aus Edelstahl mit Glaseinsatz und magnetischer Rührvorrichtung bei -10°C gemeinsam vorgelegt. Es werden 12 g getrocknetes Na₂S in mehreren Portionen zur Lösung dazugegeben. Es werden 10,6 g 3-Chlorpropyl(trichlorsilan) zugegeben und der Autoklav schnell verschlossen. Der Autoklav und die darin befindlichen Stoffe werden für 180 min auf 80°C erhitzt. Der Autoklav wird auf Normaltemperatur abgekühlt und die gebildete Suspension entnommen. Das enthaltene Lösungsmittel wird in einem Rotationsverdampfer reduziert und der ausgefallene Feststoff mit einer inertisierten Fritte entfernt. Es werden 29,2 g einer klaren, leicht bräunlichen Lösung erhalten. Die GC-Analyse der Reaktionsmischung ergibt folgende Zusammensetzung in Flächenprozent:

| | |
|---|---|
| 3-Chlorpropyl(triethoxysilan) | 5,8 |
| 3-Mercaptopropyl(triethoxysilan) | 71,1 |
| (EtO)₃Si-(CH₂)₃-S-(CH₂)₃-Si(OEt) ₃ | 8,4 |
| (EtO)₃Si-(CH₂)₃-S₂-(CH₂)₃-Si(OEt) ₃ | 4,4 |

### Beispiel 3:

40 g 3-Chlorpropyl(triethoxysilan), 23 g getrocknetes Na₂S und 22 g 3-Chlorpropyl(trichlorsilan) werden in einem Autoklaven mit Glasdoppelmantel und Edelstahldeckel bei Raumtemperatur zusammen vorgelegt und der Autoklav verschlossen. Mit einer Hochdruckpumpe werden dann 400 ml Ethanol bei Raumtemperatur zu der Suspension gepumpt. Die Mischung wird auf 80°C erwärmt und für 5 h auf 80°C gehalten. Die Mischung wird anschließend auf Raumtemperatur abgekühlt und durch Gaschromatografie analysiert. Die GC-Analyse der Reaktionsmischung ergibt folgende Zusammensetzung in Gewichtsprozent:

| | |
|---|---|
| 3-Chlorpropyl(triethoxysilan) | 1,3 |
| 3-Mercaptopropyl(triethoxysilan) | 10,3 |
| (EtO)₃Si-(CH₂)₃-S-(CH₂)₃-Si(OEt)₃ | 0,3 |
| (EtO)₃Si-(CH₂)₃-S₂-(CH₂)₃-Si(OEt)₃ | 0,9 |

| | |
|---|---|
| Basierend auf den oben genannten Komponenten beträgt die Selektivität 89% und der Umsatz 90%. | |

### Beispiel 4:

40 g 3-Chlorpropyl(triethoxysilan), 26,5 g getrocknetes Na₂S und 24,1 g 3-Chlorpropyl(trichlorsilan) werden in einem Autoklaven mit Glasdoppelmantel und Edelstahldeckel bei Raumtemperatur zusammen vorgelegt und der Autoklav verschlossen. Die Mischung wird auf 60°C erhitzt. Mit einer Hochdruckpumpe werden dann 400 ml Ethanol bei 60°C zu der Suspension gepumpt. Die Mischung wird weiter auf 80°C erwärmt und für 5 h auf 80°C gehalten. Die Mischung wird anschließend auf Raumtemperatur abgekühlt und durch Gaschromatografie analysiert. Die GC-Analyse der Reaktionsmischung ergibt folgende Zusammensetzung in Gewichtsprozent:

| | |
|---|---|
| 3-Chlorpropyl(triethoxysilan) | 0,4 |
| 3-Mercaptopropyl(triethoxysilan) | 10,2 |
| (EtO)₃Si-(CH₂)₃-S-(CH₂)₃-Si(OEt)₃ | 1,1 |
| (EtO)₃Si-(CH₂)₃-S₂-(CH₂)₃-Si(OEt) ₃ | 0,9 |

| | |
|---|---|
| Basierend auf den oben genannten Komponenten beträgt die Selektivität 82% und der Umsatz 97%. | |

### Beispiel 5:

In einem Autoklaven mit Glasdoppelmantel und Hastelloy C22 Deckel + Armaturen (Buechi AG) werden bei Raumtemperatur 50 g getrocknetes Na₂S und 650 ml trockenes Ethanol vorgelegt. Die Suspension wird erwärmt und für 20 min bei 50°C gerührt. Es werden 128,2 g einer Silan-Mischung aus 3-Chlorpropyl(diethoxy(chlor)silan), Chlorpropyl(ethoxy(dichlor)silan), Chlorpropyl(trichlorsilan) und 3-Chlorpropyl(triethoxysilan) mit einer mit Druckluft betriebenen Bürette zu der Suspension gegeben. Die verwendete Silan-Mischung wird hergestellt durch die Reaktion von 80 g 3-Chlorpropyl(triethoxysilan) und 48,2 g 3-Chlorpropyl(trichlorsilan). Über die Bürette werden weitere 150 ml Ethanol zu der Suspension gegeben. Die Mischung wird unter Rühren auf 97-102°C erwärmt und die Temperatur für 180 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,007 |
| 3-Mercaptopropyl(triethoxysilan) | 6,176 |
| (EtO)₃Si-(CH₂)₃-S-(CH₂)₃-Si(OEt) ₃ | 0, 307 |
| (EtO)₃Si-(CH₂)₃-S₂-(CH₂)₃-Si(OEt) ₃ | 0,172 |

| | |
|---|---|
| Basierend auf den oben genannten Werten beträgt der Umsatz >99 % und die Selektivität der Reaktion 93 %. | |

### Beispiel 6:

In einem Autoklaven mit Glasdoppelmantel und Hastelloy C22 Deckel + Armaturen (Buechi AG) werden bei Raumtemperatur 50 g getrocknetes Na₂S und 650 ml trockenes Ethanol vorgelegt. Die Suspension wird erwärmt und für 20 min bei 50°C gerührt. Es wird eine Mischung aus 80 g 3-Chlorpropyl(triethoxysilan) und 48,2 g 3-Chlorpropyl(trichlorsilan) mit einer mit Druckluft betriebenen Bürette zu der Suspension gegeben. Über die Bürette werden weitere 150 ml Ethanol zu der Suspension gegeben. Die Mischung wird unter Rühren auf 95-100°C erwärmt und die Temperatur für 180 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,166 |
| 3-Mercaptopropyl(triethoxysilan) | 4,467 |
| (EtO)₃Si-(CH₂)₃-S-(CH₂)₃-Si(OEt)₃ | 0, 27 6 |
| (EtO)₃Si-(CH₂)₃-S₂-(CH₂)₃-Si(OEt) ₃ | 0,245 |

| | |
|---|---|
| Basierend auf den oben genannten Werten beträgt der Umsatz 97 % und die Selektivität der Reaktion 89,5%. | |

Der Reaktor wird geleert und mit wenig Ethanol gespült, um verbliebene Reste auszutragen. Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 200-600 mbar und 60-80°C befreit. Die erhaltene Suspension wird mit 200 ml Pentan gut vermischt und für 10 h bei 4-8°C gelagert. Der ausgefallene Feststoff wird durch Filtration abgetrennt und mit 150 ml Pentan gewaschen. Von der erhaltenen, klaren Lösung wird das Pentan mit einem Rotationsverdampfer bei 200-600 mbar und 60-80°C entfernt. Es werden 119,3 g einer farblosen Flüssigkeit erhalten.

Die kombinierte Analyse mit GC, ¹H-NMR und ²⁹Si-NMR ergibt folgende Zusammensetzung des erhaltenen Produktes in Gewichtsprozent:

| | |
|---|---|
| 3-Chlorpropyl(triethoxysilan) | 2,6 |
| 3-Mercaptopropyl(triethoxysilan) | 84,7 |
| (EtO)₃Si-(CH₂)₃-S-(CH₂)₃-Si(OEt) ₃ | 3, 6 |
| (EtO)₃Si-(CH₂)₃-S₂-(CH₂)₃-Si(OEt) ₃ | 5 |

| | |
|---|---|
| Basierend auf den oben genannten Werten beträgt der Umsatz 96 % und die Selektivität der Reaktion 91 %. | |

### Beispiel 7:

In einem Autoklaven mit Glasdoppelmantel und Hastelloy C22 Deckel + Armaturen (Buechi AG) werden bei Raumtemperatur 50 g getrocknetes Na₂S und 800 ml trockenes Ethanol vorgelegt. Die Suspension wird erwärmt und für 20 min bei 50°C gerührt. Es wird eine Mischung aus 80 g 3-Chlorpropyl(triethoxysilan) und 48,2 g 3-Chlorpropyl(trichlorsilan) mit einer mit Druckluft betriebenen Bürette zu der Suspension gegeben. Über die Bürette werden weitere 200 ml Ethanol zu der Suspension gegeben. Die Mischung wird unter Rühren auf 95-100°C erwärmt und die Temperatur für 180 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,070 |
| 3-Mercaptopropyl(triethoxysilan) | 3,037 |
| (EtO)₃Si-(CH₂)₃-S-(CH₂)₃-Si(OEt) ₃ | 0, 2 |
| (EtO)₃Si-(CH₂)₃-S₂-(CH₂)₃-Si(OEt)₃ | 0,105 |

| | |
|---|---|
| Basierend auf den oben genannten Werten beträgt der Umsatz 98 % und die Selektivität der Reaktion 91 %. | |

Der Reaktor wird geleert und mit wenig Ethanol gespült, um verbliebene Reste auszutragen. Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 200-600 mbar und 60-80°C befreit. Die erhaltene Suspension wird mit 200 ml Pentan gut vermischt und für 10 h bei 4-8°C gelagert. Der ausgefallene Feststoff wird durch Filtration abgetrennt und mit 150 ml Pentan gewaschen. Von der erhaltenen, klaren Lösung wird das Pentan mit einem Rotationsverdampfer bei 200-600 mbar und 60-80°C entfernt. Es werden 116,2 g einer farblosen Flüssigkeit erhalten.

Die kombinierte Analyse mit GC, ¹H-NMR und ²⁹Si-NMR ergibt folgende Zusammensetzung des erhaltenen Produktes in Gewichtsprozent:

| | |
|---|---|
| 3-Chlorpropyl(triethoxysilan) | 1 |
| 3-Mercaptopropyl(triethoxysilan) | 81 |
| (EtO)₃Si-(CH₂)₃-S-(CH₂)₃-Si(OEt)₃ | 4,2 |
| (EtO)₃Si-(CH₂)₃-S₂-(CH₂)₃-Si(OEt) ₃ | 7,1 |

| | |
|---|---|
| Basierend auf den oben genannten Werten beträgt der Umsatz 99 % und die Selektivität der Reaktion 88 %. | |

### Beispiel 8:

In einem Autoklaven mit Glasdoppelmantel und Hastelloy C22 Deckel + Armaturen (Buechi AG) werden bei Raumtemperatur 57,8 g getrocknetes Na₂S und 650 ml trockenes Ethanol vorgelegt. Die Suspension wird erwärmt und für 20 min bei 50°C gerührt. Es wird eine Mischung aus 80,5 g 3-Chlorpropyl(triethoxysilan) und 57,4 g 3-Chlorpropyl(trichlorsilan) mit einer mit Druckluft betriebenen Bürette zu der Suspension gegeben. Über die Bürette werden weitere 150 ml Ethanol zu der Suspension gegeben. Die Mischung wird unter Rühren auf 110-115°C erwärmt und die Temperatur für 120 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,012 |
| 3-Mercaptopropyl(triethoxysilan) | 4,204 |
| (EtO)₃Si-(CH₂)₃-S-(CH₂)₃-Si(OEt)₃ | 0,262 |
| (EtO)₃Si-(CH₂)₃-S₂-(CH₂)₃-Si(OEt)₃ | 0,159 |

| | |
|---|---|
| Basierend auf den oben genannten Werten beträgt der Umsatz >99 % und die Selektivität der Reaktion 91%. | |

Der Reaktor wird geleert und mit wenig Ethanol gespült, um verbliebene Reste auszutragen. Die erhaltene Suspension wird filtriert. Der abgetrennte Feststoff wird mit 400 ml n-Hexan gewaschen. Die erhaltene Lösung wird am Rotationsverdampfer von den flüchtigen Bestandteilen bei 200-600 mbar und 60-80°C befreit. Die erhaltene Suspension wird mit 200 ml Hexan gut vermischt und für 10 h bei 4-8°C gelagert. Der ausgefallene Feststoff wird durch Filtration abgetrennt und mit 150 ml Hexan gewaschen. Von der erhaltenen, klaren Lösung wird das Hexan mit einem Rotationsverdampfer bei 20-600 mbar und 60-80°C entfernt. Es werden 121,3 g einer farblosen Flüssigkeit erhalten.

Die kombinierte Analyse mit GC, ¹H-NMR und ²⁹Si-NMR ergibt folgende Zusammensetzung des erhaltenen Produktes in Gewichtsprozent:

| | |
|---|---|
| 3-Chlorpropyl(triethoxysilan) | 0,1 |
| 3-Mercaptopropyl(triethoxysilan) | 82,1 |
| (EtO)₃Si-(CH₂)₃-S-(CH₂)₃-Si(OEt) ₃ | 2,3 |
| (EtO)₃Si-(CH₂)₃-S₂-(CH₂)₃-Si(OEt) ₃ | 8,8 |

| | |
|---|---|
| Basierend auf den oben genannten Werten beträgt der Umsatz >99 % und die Selektivität der Reaktion 88%. | |

### Beispiel 9:

In einem Autoklaven mit Glasdoppelmantel und Hastelloy C22 Deckel + Armaturen (Buechi AG) werden bei Raumtemperatur 57,7 g getrocknetes Na₂S und 800 ml trockenes Ethanol vorgelegt. Die Suspension wird erwärmt und für 20 min bei 50°C gerührt. Es wird eine Mischung aus 80,5 g 3-Chlorpropyl(triethoxysilan) und 57,4 g 3-Chlorpropyl(trichlorsilan) mit einer mit Druckluft betriebenen Bürette zu der Suspension gegeben. Über die Bürette werden weitere 200 ml Ethanol zu der Suspension gegeben. Die Mischung wird unter Rühren auf 110-115°C erwärmt und die Temperatur für 120 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,007 |
| 3-Mercaptopropyl(triethoxysilan) | 3,123 |
| (EtO)₃Si-(CH₂)₃-S-(CH₂)₃-Si(OEt)₃ | 0,273 |
| (EtO)₃Si-(CH₂)₃-S₂-(CH₂)₃-Si(OEt)₃ | 0,154 |

| | |
|---|---|
| Basierend auf den oben genannten Werten beträgt der Umsatz >99 % und die Selektivität der Reaktion 88%. | |

Der Reaktor wird geleert und mit wenig Ethanol gespült, um verbliebene Reste auszutragen. Die erhaltene Suspension wird filtriert. Der abgetrennte Feststoff wird mit 400 ml n-Hexan gewaschen. Die erhaltene Lösung wird am Rotationsverdampfer von den flüchtigen Bestandteilen bei 200-600 mbar und 60-80°C befreit. Die erhaltene Suspension wird mit 200 ml Hexan gut vermischt und für 10 h bei 4-8°C gelagert. Der ausgefallene Feststoff wird durch Filtration abgetrennt und mit 150 ml Hexan gewaschen. Von der erhaltenen, klaren Lösung wird das Hexan mit einem Rotationsverdampfer bei 20-600 mbar und 60-90°C entfernt. Es werden 116,3 g einer farblosen Flüssigkeit erhalten.

Die kombinierte Analyse mit GC, ¹H-NMR und ²⁹Si-NMR ergibt folgende Zusammensetzung des erhaltenen Produktes in Gewichtsprozent:

| | |
|---|---|
| 3-Chlorpropyl(triethoxysilan) | 0,2 |
| 3-Mercaptopropyl(triethoxysilan) | 82,1 |
| (EtO)₃Si-(CH₂)₃-S-(CH₂)₃-Si(OEt) ₃ | 2,4 |
| (EtO)₃Si-(CH₂)₃-S₂-(CH₂)₃-Si(OEt) ₃ | 8,2 |

| | |
|---|---|
| Basierend auf den oben genannten Werten beträgt der Umsatz >99 % und die Selektivität der Reaktion 89%. | |

### Beispiel 10:

In einem Autoklaven mit Glasdoppelmantel und Hastelloy C22 Deckel + Armaturen (Buechi AG) werden bei Raumtemperatur 50 g getrocknetes Na₂S und 550 ml trockenes Ethanol vorgelegt. Die Suspension wird erwärmt und für 20 min bei 50°C gerührt. Es wird eine Mischung aus 80 g 3-Chlorpropyl(triethoxysilan) und 48,2 g 3-Chlorpropyl(trichlorsilan) mit einer mit Druckluft betriebenen Bürette zu der Suspension gegeben. Über die Bürette werden weitere 150 ml Ethanol zu der Suspension gegeben. Die Mischung wird unter Rühren auf 112-117°C erwärmt und die Temperatur für 180 min gehalten. Die Mischung wird anschließend auf Raumtemperatur abgekühlt. Bei 50°C werden zu der Reaktionslösung 1,8 g Ameisensäure in 50 ml Ethanol mit der Druckbürette gegeben. Die Suspension wird für 15 min bei 50°C gerührt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,198 |
| 3-Mercaptopropyl(triethoxysilan) | 7,948 |
| (EtO)₃Si-(CH₂)₃-S-(CH₂)₃-Si(OEt) ₃ | 0,368 |
| (EtO)₃Si-(CH₂)₃-S₂-(CH₂)₃-Si(OEt)₃ | 0,766 |

| | |
|---|---|
| Basierend auf den oben genannten Werten beträgt der Umsatz 98 % und die Selektivität der Reaktion 88 %. | |

Der Reaktor wird geleert und mit wenig Ethanol gespült, um verbliebene Reste auszutragen. Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 200-600 mbar und 60-80°C befreit. Die erhaltene Suspension wird mit 200 ml Pentan gut vermischt und für 10 h bei 4-8°C gelagert. Der ausgefallene Feststoff wird durch Filtration abgetrennt und mit 150 ml Pentan gewaschen. Von der erhaltenen, klaren Lösung wird das Pentan mit einem Rotationsverdampfer bei 20-600 mbar und 60-90°C entfernt. Es werden 124,5 g einer farblosen Flüssigkeit erhalten.

Die kombinierte Analyse mit GC, ¹H-NMR und ²⁹Si-NMR ergibt folgende Zusammensetzung des erhaltenen Produktes in Gewichtsprozent:

| | |
|---|---|
| 3-Chlorpropyl(triethoxysilan) | 2,1 |
| 3-Mercaptopropyl(triethoxysilan) | 81,5 |
| (EtO)₃Si-(CH₂)₃-S-(CH₂)₃-Si(OEt) ₃ | 4,2 |
| (EtO)₃Si-(CH₂)₃-S₂-(CH₂)₃-Si(OEt) ₃ | 10,1 |

| | |
|---|---|
| Basierend auf den oben genannten Werten beträgt der Umsatz 98 % und die Selektivität der Reaktion 85 %. | |

## Patentansprüche

1. Verfahren zur Herstellung von (Mercaptoorganyl)-alkoxysilanen,
**dadurch gekennzeichnet,**
**dass** man Alkalimetallsulfid mit einem Gemisch aus (Halogenorganyl)alkoxysilan und (Halogenorganyl)-halogensilan in einem Alkohol unter Luftabschluß und einem erhöhten Druck umsetzt.

2. Verfahren zur Herstellung von (Mercaptoorganyl)-alkoxysilanen nach Anspruch 1,
**dadurch gekennzeichnet,**
**dass** man als (Mercaptoorganyl)alkoxysilan Verbindungen der allgemeinen Formel I 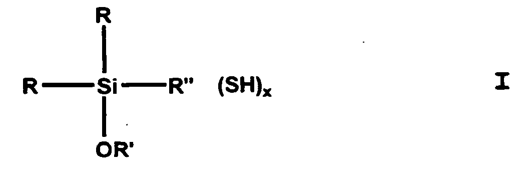 erhält, wobei R gleich oder verschieden und eine Alkyl-, Alkenyl-, Aryl- oder Aralkylgruppe mit C₁-C₈ oder eine OR' Gruppe ist,
R' gleich oder verschieden und eine C₁-C₂₄, verzweigte oder unverzweigte einbindige Alkyl- oder Alkenyl-Gruppe, Arylgruppe oder Aralkylgruppe ist, R'' eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls mit F-, Cl-, Br-, I-, NH₂- oder NHR' substituiert ist, ist, x gleich 1-3 ist.

3. Verfahren zur Herstellung von (Mercaptoorganyl)-alkoxysilanen nach Anspruch 1,
**dadurch gekennzeichnet,**
**dass** man als (Halogenorganyl)alkoxysilan Verbindungen der allgemeinen Formel II 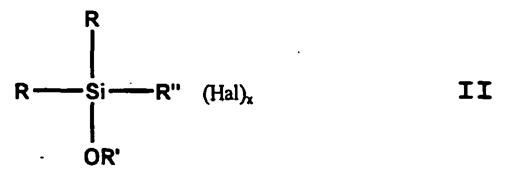 einsetzt, wobei R gleich oder verschieden und eine Alkyl-, Alkenyl-, Aryl- oder Aralkylgruppe mit C₁-C₈ oder eine OR' Gruppe ist,
R' gleich oder verschieden und eine C₁-C₂₄ verzweigte oder unverzweigte einbindige Alkyl- oder Alkenyl-Gruppe, Arylgruppe oder Aralkylgruppe ist,
R'' eine verzweigte oder unverzweigte, gesättigte oder ungesättigte, aliphatische, aromatische oder gemischt aliphatische /aromatische zweibindige C₁-C₃₀ Kohlenwasserstoffgruppe ist, die gegebenenfalls mit F-, Cl-, Br-, I-, NH₂-, oder NHR' substituiert ist,
x gleich 1-3 ist,
Hal Chlor, Brom, Fluor oder Iod ist.

4. Verfahren zur Herstellung von (Mercaptoorganyl)-alkoxysilanen nach Anspruch 1,
**dadurch gekennzeichnet,**
**dass** man daß man als (Halogenorganyl)halogensilan Verbindungen der allgemeinen Formel III 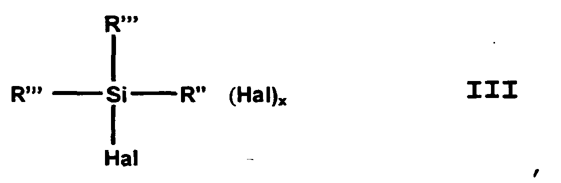 einsetzt, wobei x, Hal, R und R'' die Bedeutung gemäß Formel II haben und R''' gleich oder verschieden und R oder Hal ist.

5. Verfahren zur Herstellung von (Mercaptoorganyl)alkoxysilanen nach Anspruch 1,
**dadurch gekennzeichnet,**
**dass** das molare Verhältnis Halogenorganyl)alkyoxysilan und (Halogenorganyl)halogensilan 0,001:1 bis 2:1 beträgt.

6. Verfahren zur Herstellung von (Mercaptoorganyl)-alkoxysilanen nach Anspruch 1,
**dadurch gekennzeichnet,**
**dass** das molare Verhältnis von hydrolisierbaren Si-Halogen Funktionen in den Mischungen aus (Halogenorganyl)alkoxysilan und (Halogenorganyl)-halogensilan zu Alkalimetallsulfid zwischen 1:0,51 und 1:1,2 beträgt.

7. Verfahren zur Herstellung von (Mercaptoorganyl)-alkoxysilanen nach Anspruch 1,
**dadurch gekennzeichnet,**
**dass** man als Alkalimetallsulfid Dilithiumsulfid (Li₂S), Dinatriumsulfid (Na₂S) oder Dikaliumsulfid (K₂S) einsetzt.

8. Verfahren zur Herstellung von (Mercaptoorganyl)-alkoxysilanen nach Anspruch 1,
**dadurch gekennzeichnet,**
**dass** man als Alkohol primäre, sekundäre, tertiäre Alkohole mit 1 bis 24 Kohlenstoffatomen einsetzt.

9. Verfahren zur Herstellung von (Mercaptoorganyl)-alkoxysilanen nach Anspruch 1,
**dadurch gekennzeichnet,**
**dass** man zu Beginn der Umsetzung und/oder während der Umsetzung und/oder zum Ende der Umsetzung polare, protische, aprotische, basische oder saure Additive zur Reaktionsmischung zugibt.

10. Verfahren zur Herstellung von (Mercaptoorganyl)-alkoxysilanen nach Anspruch 1,
**dadurch gekennzeichnet,**
**dass** man die Umsetzung bei Temperaturen zwischen 0 und 180°C durchführt.

## Claims

1. Process for the preparation of (mercaptoorganyl)-alkoxysilanes, **characterized in that** alkali metal sulphide is reacted with a mixture of (haloorganyl)alkoxysilane and (haloorganyl)-halosilane in an alcohol with the exclusion of air and at elevated pressure.

2. Process for the preparation of (mercaptoorganyl)-alkoxysilanes according to Claim 1, **characterized in that**, as (mercaptoorganyl)alkoxysilane, compounds of the general formula I 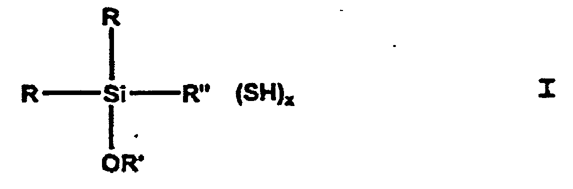 are produced wherein substituents R are identical or different and are each an alkyl, alkenyl, aryl or aralkyl group with C₁-C₈ or an OR' group,
substituents R' are identical or different and are each a C₁-C₂₄, branched or unbranched monovalent alkyl or alkenyl group, aryl group or aralkyl group,
R" is a branched or unbranched, saturated or unsaturated, aliphatic, aromatic or mixed aliphatic/aromatic divalent C₁-C₃₀ hydrocarbon group which is optionally substituted by F, Cl, Br, I, NH₂ or NHR', and
x is 1-3.

3. Process for the preparation of (mercaptoorganyl)-alkoxysilanes according to Claim 1, **characterized in that**, as (haloorganyl)alkoxysilane, compounds of the general formula II 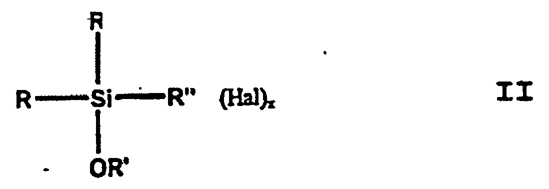 are used wherein substituents R are identical or different and are each an alkyl, alkenyl, aryl or aralkyl group with C₁-C₈ or an OR' group,
substituents R' are identical or different and are each a C₁-C₂₄, branched or unbranched monovalent alkyl or alkenyl group, aryl group or aralkyl group,
R" is a branched or unbranched, saturated or unsaturated, aliphatic, aromatic or mixed aliphatic/aromatic divalent C₁-C₃₀ hydrocarbon group which is optionally substituted by F, Cl, Br, I, NH₂ or NHR' ,
x is 1-3, and
Hal is chlorine, bromine, fluorine or iodine.

4. Process for the preparation of (mercaptoorganyl)-alkoxysilanes according to Claim 1, **characterized in that**, as (haloorganyl)halosilane, compounds of the general formula III 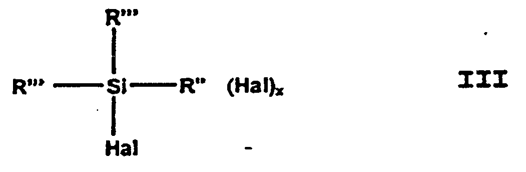 are employed in which x, Hal, R and R" are as defined for formula II and substituents R''' are identical or different and are each R or Hal.

5. Process for the preparation of (mercaptoorganyl)-alkoxysilanes according to Claim 1, **characterized in that** the molar ratio of (haloorganyl)-alkoxysilane to (haloorganyl)halosilane is from 0.001:1 to 2:1.

6. Process for the preparation of (mercaptoorganyl)-alkoxysilanes according to Claim 1, **characterized in that** the molar ratio of hydrolysable Si-halogen functions in the mixtures of (haloorganyl)-alkoxysilane and (haloorganyl)halosilane to alkali metal sulphide is between 1:0.51 and 1:1.2.

7. Process for the preparation of (mercaptoorganyl)-alkoxysilanes according to Claim 1, **characterized in that** the alkali metal sulphide used is dilithium sulphide (Li₂S), disodium sulphide (Na₂S) or dipotassium sulphide (K₂S).

8. Process for the preparation of (mercaptoorganyl)-alkoxysilanes according to Claim 1, **characterized in that**, as alcohol, primary, secondary and/or tertiary alcohols having 1 to 24 carbon atoms are employed.

9. Process for the preparation of (mercaptoorganyl)-alkoxysilanes according to Claim 1, **characterized in that** polar, protic, aprotic, basic or acidic additives are added to the reaction mixture at the beginning of the reaction and/or during the reaction and/or at the end of the reaction.

10. Process for the preparation of (mercaptoorganyl)-alkoxysilanes according to Claim 1, **characterized in that** the reaction is carried out at temperatures between 0 and 180°C.

## Revendications

1. Procédé de préparation de (mercaptoorganyl)-alcoxysilanes, **caractérisé en ce qu'**on fait réagir du sulfure de métal alcalin avec un mélange de (halogénoorganyl)alcoxysilane et de (halogénoorganyl)halogénosilane dans un alcool, à l'abri de l'air et sous une pression élevée.

2. Procédé de préparation de (mercaptoorganyl)-alcoxysilane suivant la revendication 1, **caractérisé en ce que**, comme (mercaptoorganyl)-alcoxysilane, on obtient des composés de la formule générale I : 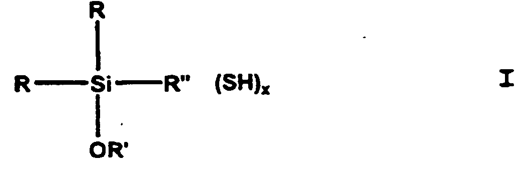 dans laquelle R est identique ou différent et représente un groupe alkyle, alcényle, aryle ou aralkyle avec C₁-C₈ ou un groupe OR',
R' est identique ou différent et représente un groupe alcényle ou alkyle en C₁-C₂₄, ramifié ou non ramifié, à simple liaison, un groupe aryle ou un groupe aralkyle,
R'' représente un groupe hydrocarboné en C₁-C₃₀, à deux liaisons, ramifié ou non ramifié, saturé ou non saturé, aliphatique, aromatique ou aliphatique/aromatique mixte, qui est éventuellement substitué par F-, Cl-, Br-, I-, NH₂- ou NHR',
x est égal à 1-3.

3. Procédé de préparation de (mercaptoorganyl)-alcoxysilanes suivant la revendication 1, **caractérisé en ce que**, comme (halogénoorganyl)-alcoxysilane, on met en oeuvre des composés de la formule générale II : 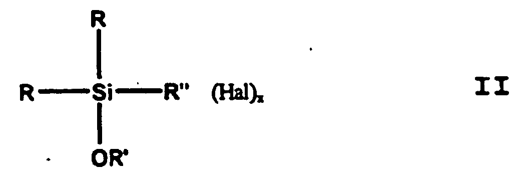 dans laquelle R est identique ou différent et représente un groupe alkyle, alcényle, aryle ou aralkyle avec C₁-C₈ ou un groupe OR',
R' est identique ou différent et représente un groupe alcényle ou alkyle en C₁-C₂₄, ramifié ou non ramifié, à simple liaison, un groupe aryle ou un groupe aralkyle,
R'' représente un groupe hydrocarboné en C₁-C₃₀, à deux liaisons, ramifié ou non ramifié, saturé ou non saturé, aliphatique, aromatique ou aliphatique/aromatique mixte, qui est éventuellement substitué par F-, Cl-, Br-, I-, NH₂- ou NHR',
x est égal à 1-3,
Hal est du chlore, du brome, du fluor ou de l'iode.

4. Procédé de préparation de (mercaptoorganyl)-alcoxysilanes suivant la revendication 1, **caractérisé en ce que**, comme (halogénoorganyl)-halogénosilane, on met en oeuvre des composés de la formule générale III : 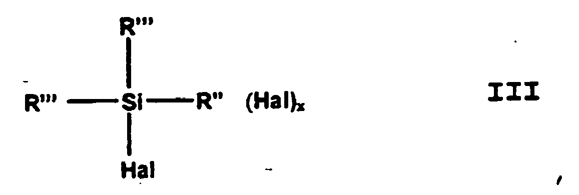 dans laquelle x, Hal, R et R'' ont la signification selon la formule II et R''' est identique ou différent et représente R ou Hal.

5. Procédé de préparation de (mercaptoorganyl)-alcoxysilanes suivant la revendication 1, **caractérisé en ce que** le rapport molaire entre (halogénoorganyl)alcoxysilane et (halogénoorganyl)-halogénosilane est de 0,001/1 à 2/1.

6. Procédé de préparation de (mercaptoorganyl)-alcoxysilanes suivant la revendication 1, **caractérisé en ce que** le rapport molaire entre les fonctions Si-halogène hydrolysables dans les mélanges de (halogénoorganyl)alcoxysilane et de (halogénoorganyl)halogénosilane et le sulfure de métal alcalin est compris entre 1/0,51 et 1/1,2.

7. Procédé de préparation de (mercaptoorganyl)-alcoxysilanes suivant la revendication 1, **caractérisé en ce que**, comme sulfure de métal alcalin, on met en oeuvre du sulfure dilithique (Li₂S), du sulfure disodique (Na₂S) ou du sulfure dipotassique (K₂S).

8. Procédé de préparation de (mercaptoorganyl)-alcoxysilanes suivant la revendication 1, **caractérisé en ce que**, comme alcool, on met en oeuvre des alcools primaires, secondaires, tertiaires comportant 1 à 24 atomes de carbone.

9. Procédé de préparation de (mercaptoorganyl)-alcoxysilanes suivant la revendication 1, **caractérisé en ce qu'**on ajoute des additifs polaires, protiques, aprotiques, basiques ou acides au mélange réactionnel au commencement de la réaction et/ou pendant la réaction et/ou à la fin de la réaction.

10. Procédé de préparation de (mercaptoorganyl)-alcoxysilanes suivant la revendication 1, **caractérisé en ce qu'**on effectue la réaction à des températures comprises entre 0 et 180°C.
